# EUROPÄISCHE PATENTSCHRIFT

(11) **EP 0 832 511 B1**
(45) Veröffentlichungstag und Bekanntmachung des Hinweises auf die Patenterteilung: **23.05.2001**
(21) Anmeldenummer: 97915634.6
(22) Anmeldetag: 16.04.1997
(51) Int. Cl.: H02K 21/22, H02K 9/00

(54) **ELEKTRISCHE MASCHINE**
ELECTRIC MACHINE
MACHINE ELECTRIQUE

(30) Priorität: 16.04.1996 DE 19614862
(43) Veröffentlichungstag der Anmeldung: 01.04.1998
(73) Patentinhaber: DaimlerChrysler Rail Systems GmbH, 13627 Berlin (DE)
(72) Erfinder: BORK, Michael, D-52134 Herzogenrath (DE)
(74) Vertreter: Gmeiner, Christa, c/o DaimlerChrysler AG
(86) Internationale Anmeldenummer: IB9700412
(87) Internationale Veröffentlichungsnummer: WO9739515

(56) Entgegenhaltungen:
- DE-A- 4 300 440
- DE-C- 3 904 516
- DE-C- 4 400 443
- FR-A- 879 038
- FR-A- 2 730 873
- GB-A- 2 240 666

## Beschreibung

### TECHNISCHES GEBIET

Die vorliegende Erfindung bezieht sich auf das Gebiet der elektrischen Maschinen mit transversaler magnetischer Fussführung. Sie betrifft eine Transversalflussmaschine, wie sie im ersten Anspruch beschrieben ist.

### TECHNOLOGISCHER HINTERGRUND UND STAND DER TECHNIK

Die Anforderungen an die Leistungsfähigkeit von elektrischen Antrieben werden in vielen Bereichen der Technik immer höher. Gründe dafür sind der Wunsch nach verbesserter Dynamik und damit grösseren Arbeitsgeschwindigkeiten bei Robotern und Werkzeugmaschinen sowie der Ersatz wartungsintensiver mechanischer Komponenten durch verschleissarme Drehstromantriebe. Untersuchungen haben gezeigt, dass bei einer direkten Kopplung der elektrischen Maschine an die Last ohne Einsatz eines mechanischen Getriebes wichtige Eigenschaften des Systems verbessert werden; dazu zählen Dynamik, Steifigkeit und Spielfreiheit.

Bei einem Direktantrieb können mechanische Übertragungselemente eingespart werden, wodurch sich das Bauvolumen und die Kosten verringern. Trotzdem erwies sich bei den meisten Antriebsaufgaben, die eine niedrige Lastdrehzahl erfordern, bisher der Einsatz eines Getriebes als vorteilhaft. Der Grund dafür liegt in einem Wachstumsgesetz der elektrischen Maschine. Die Baugrösse eines Motors nimmt in erster Näherung nur mit dem maximalen Drehmoment zu, nicht aber mit der Drehzahl. Dies bedeutet, dass die Motorgrösse bei einer vorgegebenen Leistung durch ein Untersetzungsgetriebe zwischen Motor und Last verringert werden kann, weil das Motormoment mit dem Übersetzungsverhältnis herabgesetzt wird. Diese Gesetzmässigkeit gilt grundsätzlich für alle elektrischen Maschinen, für konventionelle Typen ebenso wie für die Transversalflussmaschine. Die Tatsache verliert jedoch an Bedeutung, wenn das volumen-spezifische Motormoment gesteigert werden kann, weil der Anteil des Maschinenvolumens am Volumen des Gesamtsystems abnimmt.
Es ist bekannt, dass die Synchronmaschine mit transversaler Flussführung (Transversalflussmaschine) höhere Kraftdichten und damit grössere spezifische Drehmomente erreicht als konventionelle Motoren mit longitudinaler, also in Umfangsrichtung der elektrischen Maschine geführten Flussführung. Die Transversalflussmaschine kann besonders in Systemen mit grossem Momentenbedarf wie Direktantrieben vorteilhaft eingesetzt werden. Ein Betrieb bei höheren Drehzahlen ist dabei nicht ausgeschlossen.

Das Prinzip der Transversalflussmaschine ist seit vielen Jahren bekannt. Bisher erforderten die vorgestellten Varianten jedoch einen sehr hohen konstruktiven Aufwand, der einer wirtschaftliche Serienfertigung im Wege stand. Aus der DE 38 26 339 C1 ist beispielsweise eine Transversalflussmaschine mit ringförmigem Polkörper bekannt, der zwischen einem inneren und einem äusseren Stator angeordnet ist. Um das Laufverhalten des Rotors zu verbessern, wird hier vorgeschlagen, den Rotor beiderseits mit formstabilisierenden Ringen zu verstärken. Der erforderliche Aufwand zur Erreichung der nötigen Stabilität ist verhältnismässig gross. Zudem ist die Konstruktion einer derartigen Anordnung begrenzt auf die gezeigte Phasenzahl in den Statoren, die zusätzlich einer angepassten Speisung bedürfen. Eine Erhöhung der Phasenzahl entlang einer Maschinenachse ist rein konstruktiv aufwendig und entsprechend wartungsunfreundlich.

Weiterhin wird in der DE 44 00 443 C1 eine Transversalflussmaschine angeben, bei der der Rotor mit Magnetkreiselementen versehen ist, die in einem ringförmigen Verband angeordnet sind und über Pressringe vorgespannt sind. Eine solche Ausführung der Transversalflussmaschine bedingt ebenfalls einen erhöhten Aufwand, um die geforderte mechanische Stabilität zu erreichen.

Darüberhinaus offenbart die DE 43 00 440 A1 eine mehrsträngige Transversalflussmachine, bei der der Rotor aus einzelnen weichmagnetischen Rotorelementen aufgebaut ist, die in axialer Richtung über U-förmigen Statorelementen angeordnet und mit Permanentmagneten versehen sind, die den Schenkeln der U-förmigen Statorelemente durch einen Luftspalt beabstandet gegenüberstehen. Ein derartiger Aufbau des Rotors aus einzelnen Rotorelementen kann insbesondere bei höheren Drehzahlen des Rotors mechanisch instabil werden. Zudem ist der Aufbau materialintensiv, da der magnetische Fluss in den einzelnen weichmagnetischen Rotorelementen in axialer Richtung geführt ist und deshalb jedes Rotorelement über das ganze zugehörige U-förmigen Statorelement in axialer Richtung verläuft.

### DARSTELLUNG DER ERFINDUNG

Der Erfindung liegt die Aufgabe zugrunde, eine Transversalflussmaschine der eingangs genannten Art dahingehend weiterzuentwickeln, dass er bei einfacherer und preiswerterer Konstruktion eine höhere mechanische Stabilität, einen höheren Wirkungsgrad und geringere Verluste aufweist, und zudem mit einer handelsüblichen Standardspeisung betreibbar ist.

Erfindungsgemäss wird diese Aufgabe durch die Merkmale des ersten Anspruchs gelöst.

Der Kern der Erfindung ist darin zu sehen, dass durch die Beabstandung und magnetische Isolierung zweier weichmagnetischer Ringe im Rotor gegenüber einer Phase des Stators der magnetische Hauptfluss innerhalb dieser Ringe rein longitudinal, also in Umfangsrichtung der Transversalflussmaschine geführt wird und über benachbarte Pole wieder zum Stator hin geschlossen wird. Diese Ausführungsform ermöglicht eine Reduktion des weichmagnetischen Materials von bis zu 50% im Rotor.

Bei einer vorteilhaften Ausgestaltung der Erfindung ist der Stator zwecks einer Innenkühlung als Hohlzylinder ausgeführt und von einem Rotor umgeben. Hierbei ist der Stator gleichmässig an seinem Aussenumfang mit axial verlaufenden ersten und zweiten Nuten zweier unterschiedlicher radialer Tiefen versehen ist, wobei die ersten Nuten eine erste Tiefe aufweisen und die zweiten Nuten eine zweite Tiefe die geringer ist als die erste Tiefe und sich die ersten und die zweiten Nuten einander am Aussenumfang abwechseln. Dritte Nuten sind im Stator an dessen Aussenumfang umlaufend angeordnet. In diesen dritten Nuten ist eine Wicklung eingelegt, nachdem in die ersten Nuten Schnittbandkerne eingesetzt wurden, wobei die Schenkel der Schnittbandkerne und die dritten Nuten die Wicklung seitlich begrenzen.

Von besonderem Vorteil ist die Einlage von weichmagnetischen Stegen in den zweiten Nuten, so dass der magnetische Hauptfluss sich über die weichmagnetischen Stege, benachbarte Schnittbandkerne, über Permanentmagnete des Rotor und über zwei weichmagnetische Ringe schliesst.

Weiterhin von Vorteil zwecks Reduktion der Verluste ist eine geblechte Ausführung aller weichmagnetischen Bauteile, wie die U-förmigen Schnittbandkerne, die weichmagnetischen Stege und die weichmagnetischen Ringe.

Besonders vorteilhaft ist die Anordnung von drei nebeneinander angeordneter Phasen auf dem Stator, wobei die zu jeder Phase zugehörigen weichmagnetischen Ringe mit Permanentmagneten gegenüber benachbarten Ringen eine entsprechend Phasenverschiebung durch eine Verdrehung gegeneinander aufweisen. Derartige dreiphasige Maschinen sind mit Standardspeisegeräten betreibbar.

Ein Ausführungsbeispiel sowie die damit erzielbaren Vorteile werden nachfolgend anhand der Zeichnung erläutert.

### KURZE BESCHREIBUNG DER ZEICHNUNG

In der Zeichnung ist ein Ausführungsbeispiel der Erfindung schematisch dargestellt, und zwar zeigen:
- Fig.1: einen Längsschnitt durch eine Transversalflussmaschine;
- Fig.2: eine Flussführung des magnetischen Hauptflusses in der Transversalflussmaschine;
- Fig.3 a, b: Teilschnitte eines Stators der Transversalflussmaschine;
- Fig.4 a, b: Teilschnitte durch einen weichmagnetischen Ring;
- Fig.5: einen weichmagnetischen Steg.

Es sind nur die für das Verständnis der Erfindung wesentliche Elemente gezeigt. Die Flussführung des Hauptflusses ist mit Pfeilen dargestellt.

### WEG ZUR AUSFÜHRUNG DER ERFINDUNG

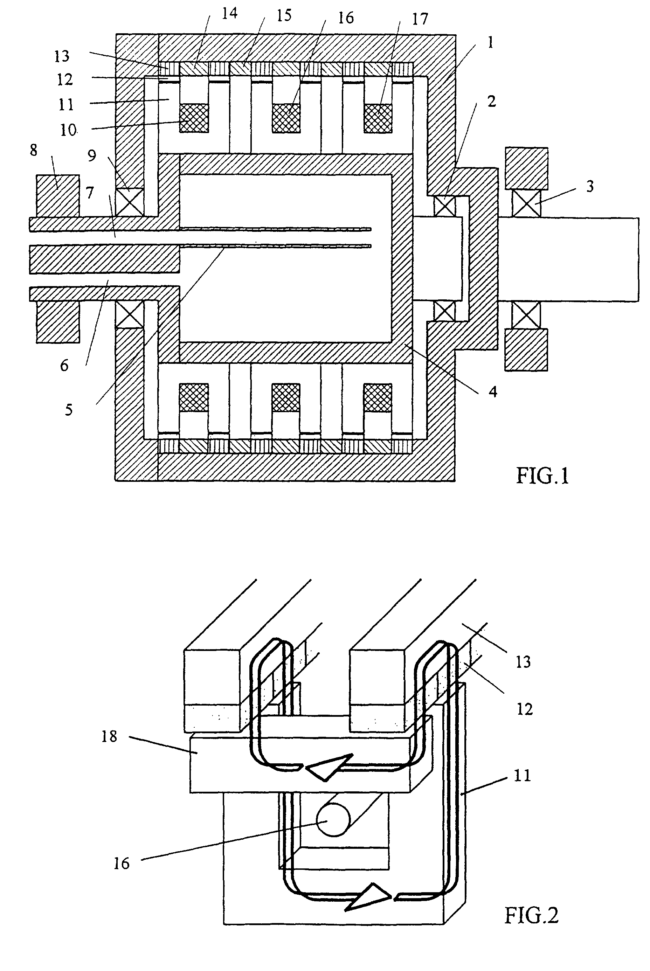

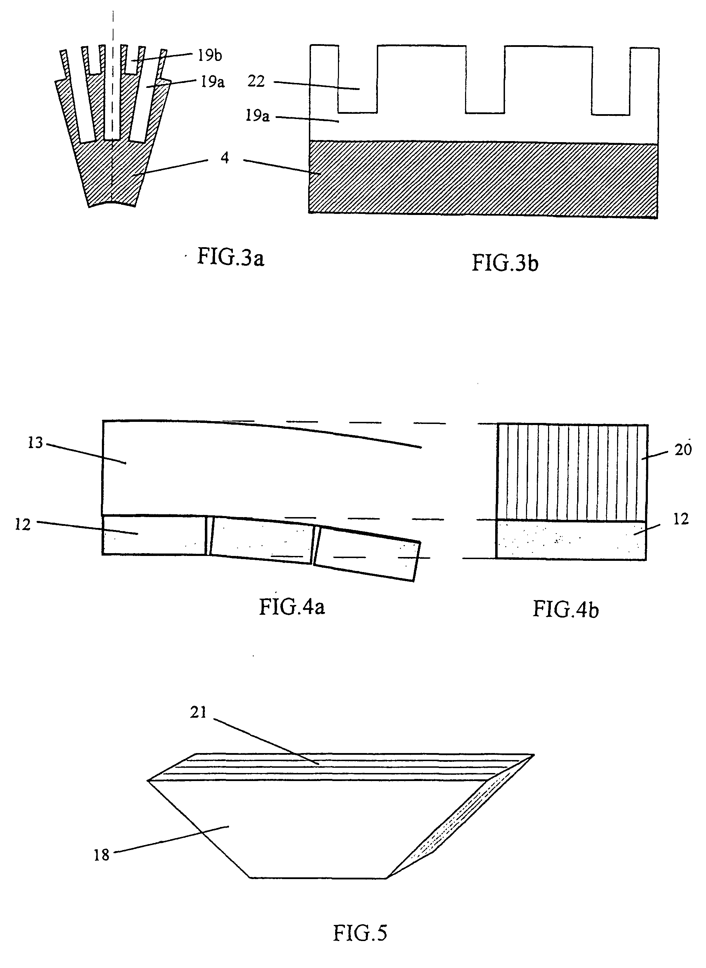

In Fig.1 ist eine Transversalflussmaschine mit einem innenliegenden Stator 4 und einem Rotor 1 gezeigt. In Verbindung mit Fig.3a, b stellt sich der Aufbau des Stator 4 wie folgt dar: Der Stator 4 weist erste Nuten 19a und zweite Nuten 19b in axialer Richtung der Maschine auf, wobei die ersten Nuten 19a tiefer als die zweiten Nuten 19b sind. In die ersten Nuten 19a sind U-förmige, sogenannte Schnittbandkerne 11 eingesetzt deren Öffnungen zwischen den Schenkel mit umlaufenden dritten Nuten 22 im Stator fluchend ausgerichtet sind. In die dritten Nuten 22, und damit zwischen benachbarte Schenkel eines jeden Schnittbandkerns 11 sind Wicklungen 10, 16, 17 eingelegt, die mit den am Umfang angeordneten Schnittbandkernen eine Phase der Transversalflussmaschine darstellen.

In den zweiten, axial verlaufenden Nuten 19b sind weichmagnetische Stege 18, Fig.2, angeordnet. Den weichmagnetischen Stegen 18 und den Schnittbandkernen 11 steht nach radial aussen und durch einen Luftspalt beabstandet jeweils ein magnetischer Pol des Rotors 1 gegenüber. Hierfür sind auf durchgehenden, weichmagnetischen Ringen 13 Permanentmagnete 12 abwechselnder Polarität nebeneinander aufgeklebt, wie auch aus Fig.4 ersichtlich ist. Jeder Phase des Stators sind zwei voneinander durch einen Kunststoffring 14 getrennte und voneinander magnetisch isolierte Ringe 13 zugeordnet. Eine Phasentrennung zwischen den Ringen 13 wird durch Kunststoffringe 15 gewährleistet.

Der magnetische Hauptfluss ist beispielhaft in Fig.2 dargestellt. Er schliesst sich über einen Schnittbandkern 11, den Luftspalt, den Permanentmagneten 12, den weichmagnetischen Ringen 13 und weichmagnetischen Stegen 18. Der Hauptfluss wird dabei in allen Bauteilen bis auf den weichmagnetischen Ringen 13 rein transversal geführt. In den weichmagnetischen Ringen 13 erfolgt die Flussführung rein longitudinal, also in Umfangsrichtung der Transversalflussmaschine. Zur Verlustminimierung sind die Ringe 13, die Stege 18 und die Schnittbandkerne 11 geblecht ausgeführt, wobei die Blechung der Schnittbandkerne hinlänglich bekannt ist. Die geblechte Ausführung der Ringe 13 und der Stege 18 sind den Fig. 4 und 5 zu entnehmen. Die weichmagnetischen Ringe 13 sind aus koaxial angeordneten Ringblechen 20 aufgebaut und die Stege 18 aus aufeinandergeschichteten Blechsegmenten 21. Dabei ist von Bedeutung, dass die einzelnen Blechsegmente 21 senkrecht in den zweiten Nuten 19b angeordnet sind, also parallel zu einer Längsschnittebene durch die Transversalflussmaschine. Die weichmagnetischen Stege 18 sind des weiteren an ihren Enden abgeschrägt und zwar an der dem Luftspalt in Fig.2 gegenüberliegenden Seite. Hierdurch lassen sich weitere Verluste reduzieren.

Der Stator 4 ermöglicht eine Wasserkühlung der Wicklung 10, 16, 17, wenn er innen hohl gestaltet wird. Er kann einteilig oder im Baukastenverfahren durch aufeinandergelegte Bleche oder Segmente gefertigt werden. Als Material eignet sich besonders Aluminium oder nichtmagnetischer Stahl. Bei kleineren Leistungen ist auch Kunststoff möglich, wodurch sich allerdings die Wärmeabfuhr verschlechtert. Besonders vorteilhaft ist die Aussenläuferbauform, weil sich eine einfache Wicklungsherstellung ergibt.

Bei der erfindungsgemässen Ausführungsvariante verringert sich der Bedarf an weichmagnetischem Werkstoff im Rotor 1 um etwa 50% gegenüber bekannten Ausführungen und es wird der Einsatz von gestanzten Ringblechen als Träger für die Permanentmagnete ermöglicht. Dadurch werden die Wirbelstromverluste im Rotor aufgrund der Ankerrückwirkung entscheidend verringert.

Auch fertigungstechnisch ergeben sich aus der erfindungsgemässen Bauform Vorteile. Alle sechs für eine dreisträngige Maschine erforderlichen Ringe 13 sind völlig identisch, beim Einbau in den Rotor muss lediglich ihre Phasenlage einzeln justiert werden. Die beiden Ringe einer Phase sind gegeneinander elektrisch um 180° verdreht (eine Polteilung), die Ringe von zwei benachbarten Phasen um 120°.

Den Gesamtaufbau der Transversalflussmaschine mit der erforderlichen Lagerung zeigt Fig.1. Der Ständer 4 wird von einer festen Halterung 8 und einem Rollenlager 2 gehalten. Er trägt die Schnittbandkerne 11, die Stege 18 (hier nicht sichtbar) und die drei Wicklungsstränge 10, 16, 17. Im Inneren befindet sich eine Kühlung mit einem Kühlmittelzufluss 7 und einem Kühlmittelabfluss 6 durch die feststehende Achse der Maschine. Das innenliegende Rohr 5 sorgt für eine gleichmässige Durchströmung des Hohlraumes. Der Rotor 1 ist als Hohlzylinder ausgeführt und wird von zwei Rollenlagern 3, 9 gehalten. Auf seiner Innenseite trägt er die weichmagnetischen Ringe 13 mit den aufgeklebten Magneten 12.

Die Erfindung reduziert sich nicht auf das gezeigte und erläuterte Ausführungsbeispiel. Denkbar im Sinne der Erfindung ist ebenfalls eine Ausführung als Innenläufer mit innenliegendem Rotor 1 und umgebenden Stator 4. Des weiteren ist eine andere Phasenzahl als die gezeigte denkbar. Von besonderem Vorteil ist allerdings die Verwendung von drei Phasen oder einem Vielfachen davon, da hierbei kostengünstige Standardumformer als Speisung für die Wicklungen 10, 16, 17 zum Einsatz kommen können.

### BEZEICHNUNGSLISTE

- 1: Rotor
- 2: Rollenlager
- 3: Rollenlager
- 4: Stator
- 5: Rohr
- 6: Kühlmittelabfluss
- 7: Kühlmittelzufluss
- 8: Halterung
- 9: Rollenlager
- 10: Wicklungsstrang
- 11: Schnittbandkern
- 12: Permanentmagnet
- 13: weichmagnetischer Ring
- 14, 15: Kunststoffring
- 16, 17: Wicklungsstrang
- 18: weichmagnetischer Steg
- 19a: axiale Nut in 4 für 11
- 19b: axiale Nut in 4 für 18
- 20: Ringblech
- 21: Blechsegment
- 22: umlaufende Nut in 4

## Patentansprüche

1. Transversalflussmaschine, umfassend mindestens einen Stator (4) und einen Rotor (1), wobei am Rotor (1) eine Anzahl mit abwechselnder Polarität versehener Permanentmagnete (12) ringförmig angeordnet sind, die eine Erregung für die Transversalflussmaschine erzeugen, welcher Stator (4) am Umfang eine Anzahl U-förmiger Schnittbandkerne (11) aus weichmagnetischem Material umfasst, wobei die Schenkel eines jeden U-förmigen Schnittbandkerns (11) in axialer Richtung der Transversalflussmaschine nebeneinander angeordnet sind und die Schenkel den Permanentmagneten (12) des Rotors (1) radial durch einen Luftspalt beabstandet gegenüberstehen, welche Schnittbandkerne (11) zwischen ihren Schenkeln mit einer Wicklung (10) versehen sind und eine Phase der Transversalflussmaschine darstellen,
dadurch gekennzeichnet,
dass für die Phase der Transversalflussmaschine die Permanentmagnete (12) des Rotors (1) auf zwei axial voneinander beabstandeten und voneinander magnetisch isolierten weichmagnetischen Ringen (13) angeordnet sind, wobei jeder weichmagnetische Ring (13) als in Umfangsrichtung der Transversalflussmaschine durchgehendes magnetisches Joch ausgeführt ist, in welchem ein magnetischer Hauptfluss der Transversalflussmaschine in Umfangsrichtung der Transversalflussmaschine geführt ist.

2. Transversalflussmaschine nach Anspruch 1,
dadurch gekennzeichnet,
dass der Stator (4) als Hohlzylinder ausgeführt ist und von dem Rotor (1) umgeben ist.

3. Transversalflussmaschine nach Anspruch 2,
dadurch gekennzeichnet,
dass der Stator (4) gleichmässig an seinem Aussenumfang mit axial verlaufenden ersten und zweiten Nuten (19a, 19b) zweier unterschiedlicher radialer Tiefen versehen ist, wobei die ersten Nuten (19a) eine erste Tiefe aufweisen und die zweiten Nuten (19b) eine zweite Tiefe die geringer ist als die erste Tiefe, und dass sich die ersten und die zweiten Nuten (19a, 19b) einander am Aussenumfang abwechseln.

4. Transversalflussmaschine nach Anspruch 3,
dadurch gekennzeichnet,
dass der Stator (4) mit einer Anzahl dritter, am Aussenumfang angeordneter, umlaufender Nuten (22) versehen ist.

5. Transversalflussmaschine nach Anspruch 4,
dadurch gekennzeichnet,
dass in die ersten Nuten (19a) die U-förmigen Schnittbandkerne (11) einsetzbar sind, wobei der Zwischenraum zwischen den Schenkeln eines jeden Schnittbandkerns (11) der Breite der umlaufenden, dritten Nut (22) entspricht, und der Zwischenraum fluchtend zu der dritten Nut (22) ausgerichtet ist.

6. Transversalflussmaschine nach Anspruch 5,
dadurch gekennzeichnet,
dass in den zweiten Nuten (19b) weichmagnetische Stege (18) eingesetzt sind, die mit benachbarten Schnittbandkernen (11) über Permanentmagnete (12) des Rotor (1) und über zwei weichmagnetische Ringe (13) in Wirkverbindung stehen.

7. Transversalflussmaschine nach Anspruch 6,
dadurch gekennzeichnet,
dass die weichmagnetischen Stege (18) aus Blechsegmenten (21) bestehen, wobei die Blechsegmente (21) parallel zu einer axialen Schnittebene durch die Transversalflussmaschine ausgerichtet sind.

8. Transversalflussmaschine nach Anspruch 1,
dadurch gekennzeichnet,
dass die weichmagnetischen Ringe (13) aus einzelnen Ringblechen (20) aufgebaut sind.

9. Transversalflussmaschine nach Anspruch 1,
dadurch gekennzeichnet,
dass die Schnittbandkerne (11) in Flussrichtung des magnetischen Hauptflusses geblecht ausgeführt sind.

10. Transversalflussmaschine nach Anspruch 2,
dadurch gekennzeichnet,
dass der Stator (4) zur Kühlung mit einem Kühlmittelzufluss (7) und einem Kühlmittelabfluss (6) versehen ist.

11. Transversalflussmaschine nach Anspruch 1,
dadurch gekennzeichnet,
dass eine Anzahl Phasen axial beabstandet nebeneinander am Umfang des Stators (4) angeordnet sind, dass entsprechend der Anzahl Phasen eine Anzahl weichmagnetischer Ringe (13) am Rotor (1) angeordnet sind, wobei die zu einer Phase gehörigen weichmagnetischen Ringe (13) gegenüber benachbarten weichmagnetischen Ringen (13) in Umfangsrichtung des Rotors (1) zwecks einer Phasenverschiebung verdreht angeordnet sind.

12. Transversalflussmaschine nach Anspruch 6 oder 7,
dadurch gekennzeichnet,
dass die weichmagnetischen Stege (18) an beiden Enden auf der einem Nutengrund der zweiten Nut (19b) zugewandten Seite abgeschrägt sind.

## Claims

1. Transverse-flux machine, comprising at least one stator (4) and one rotor (1), with a number of permanent magnets (12), which are provided with alternating polarity, being arranged in the form of a ring on the rotor (1) and producing excitation for the transverse-flux machine, which stator (4) has a number of U-shaped cut-strip cores (11), composed of soft-magnetic material on the circumference, with the limbs of each U-shaped cut-strip core (11) being arranged alongside one another in the axial direction of the transverse-flux machine, and the limbs being opposite the permanent magnets (12) of the rotor (1), separated from them radially by an air gap, which cut-strip cores (11) are provided with a winding (10) between their limbs and represent one phase of the transverse-flux machine,
characterized
in that, for the phase of the transverse-flux machine, the permanent magnets (12) of the rotor (1) are arranged on two soft-magnetic rings (13) which are separated from one another axially and are magnetically isolated from one another, with each soft-magnetic ring (13) being in the form of a magnetic yoke which is continuous in the circumferential direction of the transverse-flux machine and in which a main magnetic flux of the transverse-flux machine is guided in the circumferential direction of the transverse-flux machine.

2. Transverse-flux machine according to Claim 1,
characterized
in that the stator (4) is in the form of a hollow cylinder and is surrounded by the rotor (1).

3. Transverse-flux machine according to Claim 2,
characterized
in that the stator (4) is provided, uniformly on its outer circumference, with axially running first and second slots (19a, 19b) with two different radial depths, with the first slot (19a) having a first depth, and the second slot (19b) having a second depth, which is less than the first depth and in that the first and the second slots (19a, 19b) alternate with one another on the outer circumference.

4. Transverse-flux machine according to Claim 3,
characterized
in that the stator (4) is provided with a number of third circumferential slots (22) arranged on the outer circumference.

5. Transverse-flux machine according to Claim 4,
characterized
in that the U-shaped cut-strip cores (11) can be inserted into the first slots (19a), with the space between the limbs of each cut-strip core (11) corresponding to the width of the circumferential, third slot (22), and the intermediate space being aligned such that it is flush with the third slot (22).

6. Transverse-flux machine according to Claim 5,
characterized
in that soft-magnetic webs (18) are inserted in the second slot (19b) and interact with adjacent cut-strip cores (11) via permanent magnets (12) on the rotor (1) and via two soft-magnetic rings (13).

7. Transverse-flux machine according to Claim 6,
characterized
in that the soft-magnetic webs (18) are composed of sheet-metal segments (21), with the sheet-metal segments (21) being aligned parallel to an axial section plane through the transverse-flux machine.

8. Transverse-flux machine according to Claim 1,
characterized
in that the soft-magnetic rings (13) are formed from individual sheet-metal rings (20).

9. Transverse-flux machine according to Claim 1,
characterized
in that the cut-strip cores (11) are laminated in the flux direction of the main magnetic flux.

10. Transverse-flux machine according to Claim 2,
characterized
in that, for cooling, the stator (4) is provided with a coolant inlet (7) and a coolant outlet (6).

11. Transverse-flux machine according to Claim 1,
characterized
in that a number of phases are arranged separated axially alongside one another on the circumference of the stator (4), in that a number of soft-magnetic rings (13) corresponding to the number of phases are arranged on the rotor (1), with those soft-magnetic rings (13) which are associated with one phase being arranged twisted with respect to adjacent soft-magnetic rings (13) in the circumferential direction of the rotor (1), for the purpose of phase-shifting.

12. Transverse-flux machine according to Claim 6 or 7,
characterized
in that the soft-magnetic webs (18) are chamfered at both ends on the side facing a slot base of the second slot (19b).

## Revendications

1. Moteur à flux transversal comprenant au moins un stator (4) et un rotor (1), une pluralité d'aimants permanents (12) de polarité alternante étant disposés sur le rotor (1) suivant une configuration annulaire et produisant une excitation pour le moteur à flux transversal, ce stator (4) comprenant sur sa périphérie une pluralité de tores enroulés en forme de U (11) en matériau magnétique doux, les branches de chaque tore enroulé en forme de U (11) étant disposées les unes à côté des autres dans la direction axiale du moteur à flux transversal et les branches étant situées en face des aimants permanents (12) du rotor (1), espacées de ceux-ci radialement par un entrefer, les tores enroulés (11) étant pourvus entre leurs branches d'un enroulement (10) et représentant une phase du moteur à flux transversal, caractérisé en ce que, pour la phase du moteur à flux transversal, les aimants permanents (12) du rotor (1) sont disposés sur deux anneaux magnétiques doux (13) isolés magnétiquement l'un de l'autre et espacés axialement l'un de l'autre, chaque anneau magnétique doux (13) étant réalisé en tant que culasse magnétique traversant le moteur à flux transversal dans la direction périphérique, dans laquelle un flux principal magnétique du moteur à flux transversal est guidé dans la direction périphérique du moteur à flux transversal.

2. Moteur à flux transversal selon la revendication 1, caractérisé en ce que le stator (4) est réalisé sous la forme d'un cylindre creux et est entouré par le rotor (1).

3. Moteur à flux transversal selon la revendication 2, caractérisé en ce que le stator (4) est pourvu uniformément sur sa périphérie extérieure de premières et deuxièmes rainures (19a, 19b) s'étendant axialement, de deux profondeurs radiales différentes, les premières rainures (19a) présentant une première profondeur et les deuxièmes rainures (19b) présentant une deuxième profondeur inférieure à la première profondeur, et en ce que les premières et les deuxièmes rainures (19a, 19b) alternent mutuellement sur la périphérie extérieure.

4. Moteur à flux transversal selon la revendication 3, caractérisé en ce que le stator (4) est pourvu d'une pluralité de troisièmes rainures périphériques (22) disposées sur la périphérie extérieure.

5. Moteur à flux transversal selon la revendication 4, caractérisé en ce que les tores enroulés en forme de U (11) sont insérables dans les premières rainures (19a), l'espace intermédiaire entre les branches de chaque tore enroulé (11) correspondant à la largeur de la troisième rainure périphérique (22), et l'espace intermédiaire étant orienté en alignement avec la troisième rainure (22).

6. Moteur à flux transversal selon la revendication 5, caractérisé en ce que des nervures magnétiques douces (18) sont insérées dans les deuxièmes rainures (19b), lesquelles coopèrent activement avec les tores enroulés voisins (11) par le biais des aimants permanents (12) du rotor (1) et par le biais de deux anneaux magnétiques doux (13).

7. Moteur à flux transversal selon la revendication 6, caractérisé en ce que les nervures magnétiques douces (18) se composent de segments de tôle (21), les segments de tôle (21) étant orientés parallèlement à un plan de coupe axial traversant le moteur à flux transversal.

8. Moteur à flux transversal selon la revendication 1, caractérisé en ce que les anneaux magnétiques doux (13) sont constitués de tôles annulaires individuelles (20).

9. Moteur à flux transversal selon la revendication 1, caractérisé en ce que les tores enroulés (11) sont réalisés en tôle dans la direction d'écoulement du flux magnétique principal.

10. Moteur à flux transversal selon la revendication 2, caractérisé en ce que le stator (4) est pourvu pour le refroidissement, d'une entrée de réfrigérant (7) et d'une évacuation de réfrigérant (6).

11. Moteur à flux transversal selon la revendication 1, caractérisé en ce qu'une pluralité de phases sont disposées espacées axialement les unes à côté des autres sur la périphérie du stator (4), en ce qu'en fonction du nombre de phases, une pluralité d'anneaux magnétiques doux (13) sont disposés sur le rotor (1), les anneaux magnétiques doux (13) appartenant à une phase étant disposés de travers par rapport aux anneaux magnétiques doux voisins (13) dans la direction périphérique du rotor (1) en vue d'un déphasage.

12. Moteur à flux transversal selon la revendication 6 ou 7, caractérisé en ce que les nervures magnétiques douces (18) sont biseautées aux deux extrémités du côté tourné vers le fond de la rainure de la deuxième rainure (19b).
